# EUROPEAN PATENT SPECIFICATION

(11) **EP 2 871 459 B1**
(45) Date of publication and mention of the grant of the patent: **12.04.2017**
(21) Application number: 14192560.2
(22) Date of filing: 10.11.2014
(51) Int. Cl.: G01M 5/00, G01B 11/24, F01D 21/00

(54) **Turbomachine airfoil erosion determination**
Erosionsbestimmung für Turbomaschinenschaufel
Détermination de l'érosion d'une aube de turbomachine

(30) Priority: 12.11.2013 US 201314077873
(43) Date of publication of application: 13.05.2015
(73) Proprietor: General Electric Company, Schenectady, NY 12345 (US)
(72) Inventor: Salm, Jacob Andrew, Greenville, SC South Carolina 29615 (US); Beach, Kelsey Elizabeth, Atlanta, GA Georgia 30339 (US); Pistner, Alexander James, Atlanta, GA Georgia 30339 (US); Turan, Birol, 41470 TR Kocaeli (TR)
(74) Representative: Pöpper, Evamaria

(56) References cited:
- WO-A1-2010/003512
- JP-A- S63 246 637

## Description

### BACKGROUND OF THE INVENTION

The disclosure relates generally to turbomachine airfoils and, more particularly, to a method and system for turbomachine airfoil erosion determination.

Turbomachine airfoils erode over time in all settings in which they are used. For example, compressor blade erosion is of concern with gas turbines operating with evaporative coolers, inlet foggers, and water wash operations.

Several inspection methods for erosion on turbomachine airfoils have been attempted. In one approach, a three-dimensional scanner or optical system is used. These inspection systems require line of sight to the blade being measured, preventing an in-situ measurement. In another approach, a caliper device is used to measure the chord length of the compressor blade. Chord length is a length between a leading edge and a trailing edge of a turbomachine airfoil. A change in chord length is an indicator of erosion. In this setting, the caliper device must be positioned parallel to the platform of the compressor blades for proper measuring. This approach has proven to be unreliable for prediction of overall chord loss or erosion, in part, because it is not easily repeatable, which results in inadequate accuracy.

In another approach, a laser profiler has been used to obtain a profile of a leading edge of a turbomachine airfoil, and a complicated geometrical mathematical determination of a width of the leading edge based on a centroid of the profile is performed. The measured leading edge width is then compared to a predetermined distance to determine whether erosion has occurred. This approach is oftentimes unworkable because manufacturing variation in certain turbomachine airfoils is too large to allow determination of erosion by measuring leading edge width. More specifically, the original airfoil profiles and, consequently, lateral edge widths are oftentimes not manufactured with sufficient uniformity to allow erosion determination based on a changed leading edge width after a period of use.

Similar methods are disclosed in JP 63246637 and WO 2010/003512 A1.

### BRIEF DESCRIPTION OF THE INVENTION

A first aspect of the invention is directed to a system according to claim 8.

A second aspect of the disclosure provides a computer-implemented method according to claim 1.

A program product stored on a computer readable medium for determining erosion of a turbomachine airfoil according to claim 7.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic drawing of a system for turbomachine airfoil erosion determination according to embodiments of the invention.
FIG. 2 shows a perspective view of a laser profiler of the system of FIG. 1 according to embodiments of the invention.
FIG. 3 shows a graphical representation of a comparison between two-dimensional profiles of a leading edge and a base line profile of the same turbomachine airfoil according to embodiments of the invention.
FIG. 4 shows a flow diagram of a process of determining erosion according to embodiments of the invention.
FIGS. 5-9 show graphical representations of a process of determining erosion in a turbomachine airfoil according to embodiments of the invention.

It is noted that the drawings of the disclosure are not to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

As indicated above, the disclosure provides for erosion determination of a turbomachine airfoil. The teachings of the invention may be applied to any variety of turbomachine airfoil including but not limited to blades or nozzles of: a compressor, gas turbine, steam turbine, jet engine, etc. In general terms, a system, method or program product according to embodiments of the invention attains a two-dimensional used profile of a leading edge at a specified radial position on a turbomachine airfoil after use, e.g., using a laser profiler. Opposing substantially straight alignment portions of the two-dimensional used profile are aligned with opposing substantially straight alignment portions of a previously attained, two-dimensional, baseline profile of the turbomachine airfoil. The alignment portions of each profile are in substantially identical radial locations of the turbomachine airfoil. A comparison of the used profile to the baseline profile then determines whether the leading edge at the specified radial position of the used turbomachine airfoil has erosion.

As will be appreciated by one skilled in the art, the present invention may be embodied as a system, method or computer program product. Accordingly, the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present invention may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

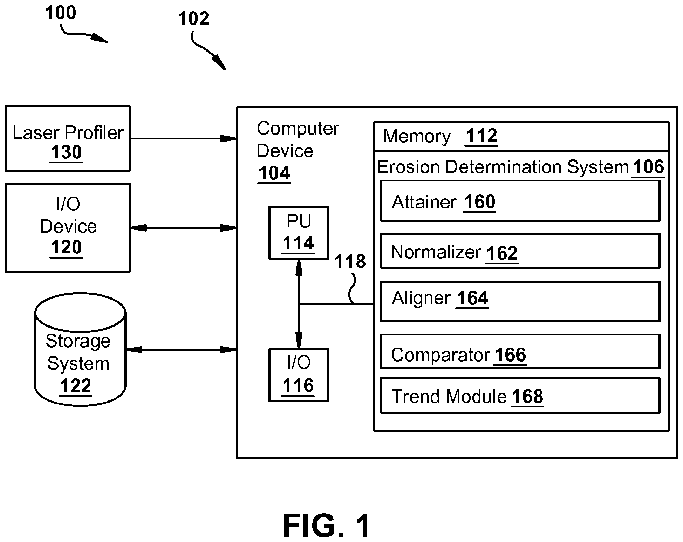

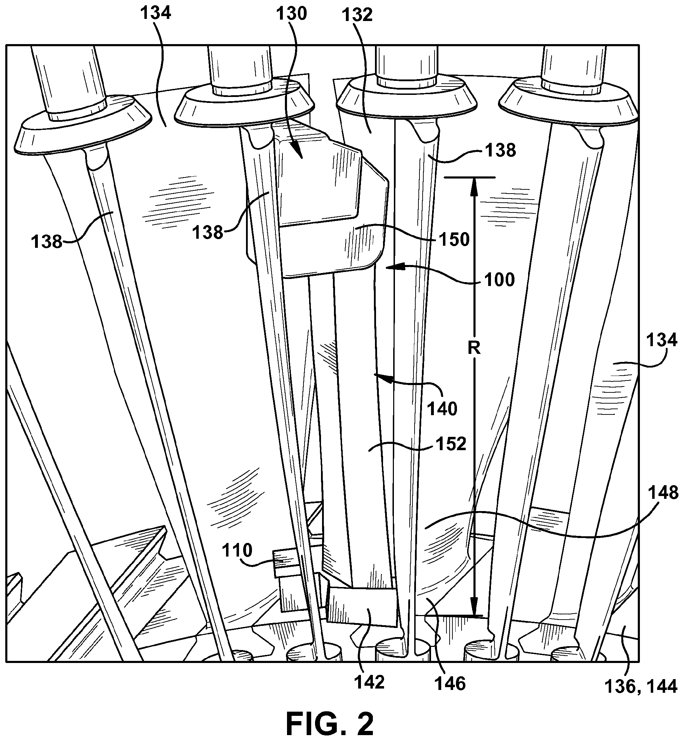

Referring now to FIGS. 1-2, embodiments of the invention will now be described in detail. FIG. 1 shows a schematic drawing of a computer system 100 for determining turbomachine airfoil erosion; and FIG. 2 shows a perspective view of a laser profiler 130 of the system of FIG. 1. Referring to FIG. 1, system 100 includes a computer infrastructure 102 that can perform the various process steps described herein for turbomachine airfoil erosion determination. In particular, computer infrastructure 102 is shown including a computing device 104 that comprises an erosion determination system 106, which enables computing device 104 to determine turbomachine airfoil erosion by performing the process steps of the disclosure.

Computing device 104 is shown including a memory 112, a processor (PU) 114, an input/output (I/O) interface 116, and a bus 118. Further, computing device 104 is shown in communication with an external I/O device/resource 120 and a storage system 122. As is known in the art, in general, processor 114 executes computer program code, such as erosion determination system 106, that is stored in memory 112 and/or storage system 122. While executing computer program code, processor 114 can read and/or write data, such as turbomachine airfoil erosion determination, to/from memory 112, storage system 122, and/or I/O interface 116. Bus 118 provides a communications link between each of the components in computing device 104. I/O device 120 can comprise any device that enables a user to interact with computing device 104 or any device that enables computing device 104 to communicate with one or more other computing devices. Input/output devices (including but not limited to keyboards, displays, pointing devices, etc.) can be coupled to the system either directly or through intervening I/O controllers.

Computing device 104 can comprise any general purpose computing article of manufacture capable of executing computer program code installed by a user (e.g., a personal computer, server, handheld device, etc.). However, it is understood that computing device 104 and erosion determination system 106 are only representative of various possible equivalent computing devices that may perform the various process steps of the disclosure. To this extent, in other embodiments, computing device 104 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, computer infrastructure 102 is only illustrative of various types of computer infrastructures for implementing the disclosure. For example, in one embodiment, computer infrastructure 102 may comprise two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

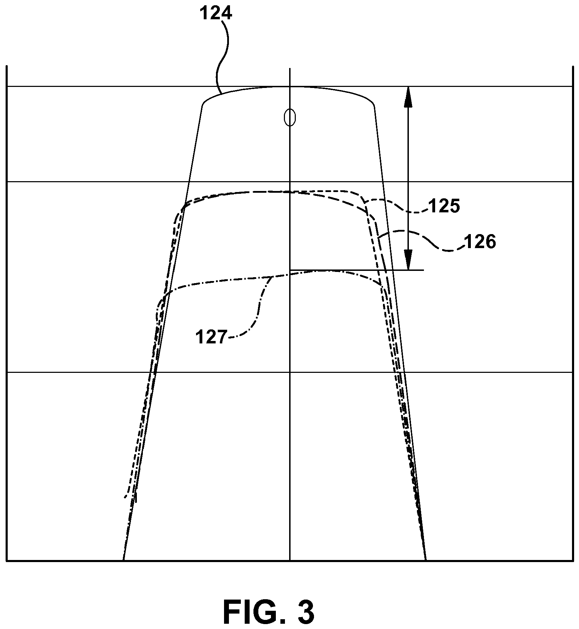

As shown in FIG. 1, system 100 may also include a laser profiler 130 (i.e., as a particular type of I/O device 120). Laser profiler 130 (also referred to as a sensor) may include any laser measurement device capable of measuring a two-dimensional profile of a turbomachine airfoil, as illustrated, for example, in FIG. 3. As illustrated in FIG. 3, a two-dimensional profile includes a two-dimensional representation of an airfoil's shape, as a partial, lateral cross-section. FIG. 3 shows four (4) two-dimensional profiles: a baseline profile 124 of the airfoil prior to use, and three (3) used profiles 125, 126, 127 of the airfoil at various stages of use. One example laser profiler 130 may include a model HS730LE from Origin Technologies, but other laser profilers may also be employed.

With reference to FIG. 2, laser profiler 130 is shown positioned relative to a turbomachine airfoil 132 for measurement thereof at a specified radial position R during a point of non-use (rotational movement) of the turbomachine airfoil. In this setting, the particular turbomachine airfoil is a blade 132 of a compressor. As noted herein, the turbomachine airfoil may take a variety of forms. As known in the art, adjacent blades 134 are arranged circumferentially adjacent to blade 132 about a rotor 136, and rotate with the rotor during operation. Stationary nozzle vanes 138 are positioned circumferentially about rotor 136 and axially adjacent blades 132, 134 to direct the operative fluid towards the blades. Laser profiler 130 measures a two-dimensional profile of the leading edge at a specified radial position R on the turbomachine airfoil. The specified radial position R is predetermined prior to use of system 100. The radial position may be selected, for example, to evaluate a position having known higher erosion issues for the particular stage, airfoil, airfoil section, etc., of the turbomachine. As will be described herein, a number of specified radial positions may be used during use of system 100.

System 100 may also include a mount 140 for mounting laser profiler 130 for measuring of the two-dimensional profile at specified radial position R. Mount 140 allows system 100 to operate accurately and in a repetitive fashion at the selected radial position, which is especially advantageous for newer turbomachine airfoils that have extreme tapers. In one embodiment, mount 140 positions laser profiler 130 between a pair of vanes 138 of a nozzle stage adjacent to the turbomachine airfoil 132 at issue, e.g., in the form of a compressor blade. Mount 140 may take a variety of forms capable of positioning laser profiler 130 at the specified radial position R. In one embodiment, mount 140 includes: a base 142 configured to interact with at least one of: a rotor wheel 144, a shank 146 of turbomachine airfoil 132 and an airfoil portion 148 of the turbomachine airfoil; a support 150 for supporting the laser profiler 130, and an elongated member 152 for positioning the support relative to the base such that the laser profiler senses at the specified radial position. In one embodiment, base 142 may be magnetized to adhere to the particular part(s) and immobilize the base. However, other manners of immobilizing the base may be employed, e.g., shaping the base so as not to move when interacting with the particular part(s). Elongated member 152 may be length adjustable if desired using any now known or later developed manner. Base 142 may be constructed for a particular stage of turbomachine airfoil in order to immovably position laser profiler 130 at the specified radial position for a plurality of airfoils in the particular stage. Mount 140 may be provided in sets to accommodate system 100 uses for a variety of stages, airfoils and turbomachines having different dimensions.

Returning to FIG. 1, as previously mentioned and discussed further herein, erosion determination system 106 enables computing infrastructure 102 to determine turbomachine airfoil erosion. To this extent, erosion determination system 106 is shown including an attainer 160, a normalizer 162, an aligner 164, a comparator 166 and a trend module 168. Operation of each of these systems/modules is discussed further below. It is understood that some of the various systems shown in FIG. 1 can be implemented independently, combined, and/or stored in memory for one or more separate computing devices that are included in computer infrastructure 102. Further, it is understood that some of the systems and/or functionality may not be implemented, or additional systems and/or functionality may be included as part of system 100.

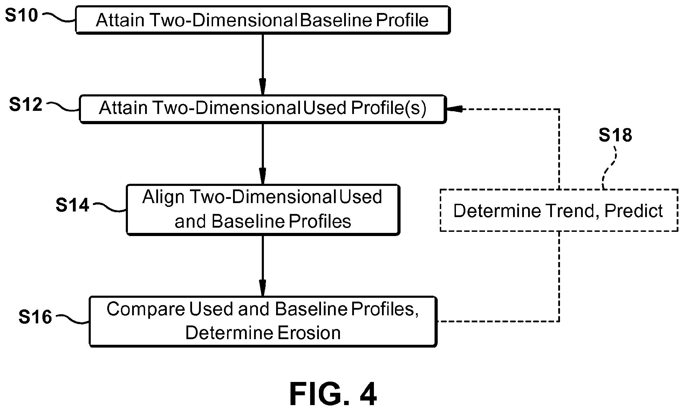

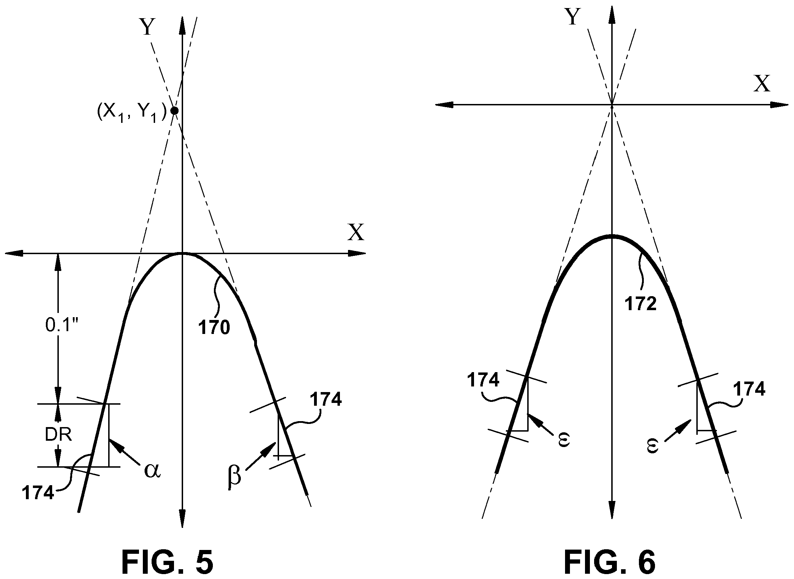

Referring to FIGS. 1 and 2 along with the flow diagram of FIG. 4 and the graphical representations of FIGS. 5-9, operation of system 100 will now be described.

As a preliminary step S10, attainer 160 (FIG. 1) may attain a two-dimensional baseline profile of turbomachine airfoil 132, i.e., where the baseline profile is not already attained and stored in memory 112 or 122 (FIG. 1). In contrast to conventional techniques, the use of a baseline profile of the turbomachine airfoil to determine erosion eliminates concerns relative to manufacturing variation/nonuniformity since an ideal turbomachine airfoil is being used for comparison. Two-dimensional baseline profile 172 (FIG. 6) may be attained in a number of ways. In one embodiment, described in greater detail herein, baseline profile may be attained by actually measuring a turbomachine airfoil prior to use. In another embodiment, also described in greater detail herein, baseline profile 172 (FIG. 6) may be attained by measuring the turbomachine airfoil being evaluated after some amount of use (i.e., a lesser amount of use then when being evaluated for erosion). In another embodiment, the baseline profile may be attained from a nominal model, e.g., based on a CAD based definition of the blade profile.

Turning to the situations in which baseline profile 172 (FIG. 6) is attained by measuring an actual turbomachine airfoil (e.g., prior to use or after some amount of use), preliminary step S10 may include attaining an actual baseline profile by mounting laser profiler 130 for measuring of a raw, two-dimensional baseline profile 170 (FIG. 5) at the specified radial position using mount 140. As described relative to FIG. 1, mount 140 is configured to ensure laser profiler 130 senses at the specified radial position R. The preliminary attaining step S10 may also include attainer 160 (FIG. 1) receiving a raw baseline profile 170 (FIG. 5) of the leading edge of the turbomachine airfoil (e.g., prior to use or after some use) as measured by laser profiler 130 (or receiving it from memory or another device if already stored).

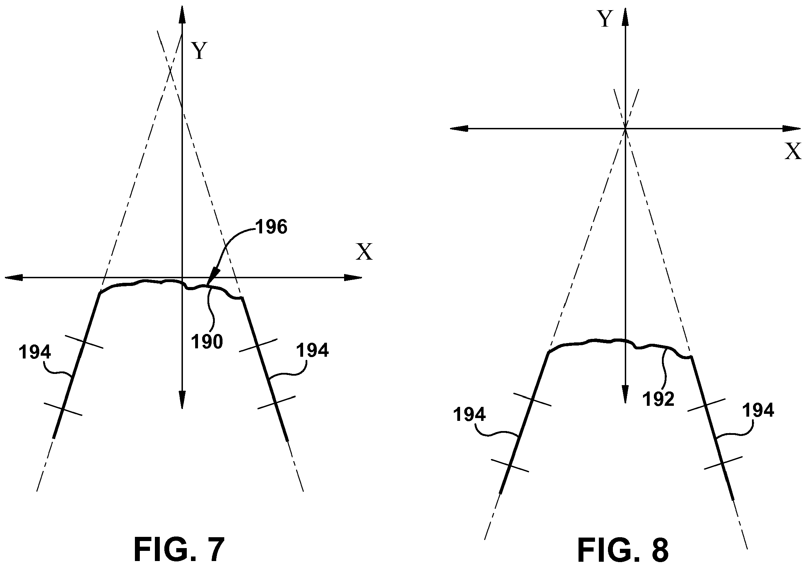

As shown in FIG. 5, raw baseline profile 170 represents a partial, lateral cross-section of the turbomachine airfoil and indicates a substantially smooth, rounded leading edge with no erosion. (It is understood that while FIGS. 5-9 illustrate processing relative to a rounded leading edge, turbomachine airfoil 132 may have a variety of differently shaped leading edges (see, e.g., the flatter leading edge of FIG. 3)). As illustrated in FIG. 5, raw baselines profile 170 may be askew relative to an origin (of the X-Y axis) centered at a maximum measured point of the profile. This translation/rotation of raw baseline profile 170 is due to the angle at which a turbomachine airfoil twists, tapers, etc. To accommodate further processing, preliminary attaining step S10 may also include attainer 160 calling on normalizer 162 (FIG. 1) to normalize raw baseline profile 170 to attain baseline profile 172, as shown in FIG. 6. The normalization includes re-positioning/re-configuring raw baseline profile 170 in a standardized fashion such that two-dimensional profiles of the airfoil after use (192, FIG. 8) can be similarly normalized and thus uniformly compared to the baseline profile, as will be described herein. The normalizing of raw baseline profile 170 may take a variety of now known or later developed mathematical/geometrical calculations. In one embodiment, however, normalizing may include, as shown in FIGS. 5-6, identifying opposing substantially straight alignment portions 174 of raw baseline profile 170 at a specified depth range DR from the leading edge (at origin) of the raw baseline profile. The depth range used for a particular turbomachine airfoil for identifying alignment portions 174 is selected to be sufficiently deep on the airfoil so as to substantially reduce the possibility of erosion at that location, and thus may vary from airfoil to airfoil. In one example airfoil, the depth range may be about 2.5 millimeters to about 5 millimeters.

As shown in FIG. 5, preliminary attaining step S10 may also include normalizer 162 determining a compare angle (α, β) of each opposing alignment portion 174 relative to an axis (y-axis) centered at the leading edge (at origin) of raw baseline profile 170. Normalizer 162 identifies an intersection point (X₁, Y₁) of alignment portions 174, e.g., by extending the alignment portions 174 past the leading edge until they intersect. (The position of intersection point (X₁, Y₁) away from the Y-axis indicates how raw baseline profile 170 is askew). Normalizer 162 may also calculate a linear representation (e.g., y=mx+b) of each alignment portion 174 in raw baseline profile 170 for comparison with later raw used profiles (190, FIG. 7), as described herein. As shown in FIG. 6, preliminary attaining step S10 finally includes normalizer 162 attaining baseline profile 172 by translating raw baseline profile 170 to place the intersection point on the axis (Y-axis) and rotating raw baseline profile 170 to make the compare angles (now ε in FIG. 6) of each alignment portion 174 equal relative to the axis. Baseline profile 172 is now normalized and in a state that it can be used for comparison to two-dimensional used profiles (192, FIG. 8) of the turbomachine airfoil after use. The linear representation (e.g., y=mx+b) of each alignment portion 174 of raw baseline profile 170 along with baseline profile 172, as shown in FIG. 6, may be saved in memory 112 or 122 (FIG. 1). Although a particular process of normalizing a profile has been described, it is understood that a variety of alternative processes may be implemented for a baseline profile or a used profile. For example, the process of normalizing a profile may be carried out with the assistance of computer aided design modeling systems.

Preliminary attaining step S10 may include attaining baseline profile 172 from a single turbomachine airfoil, e.g., prior to use, after an amount of use or based on a nominal model. Alternatively, the step may also include attaining baseline profile 172 by averaging a plurality of two-dimensional profiles for a plurality of turbomachine airfoils. Ideally, each turbomachine airfoil in a particular stage of a turbomachine should be identical. However, some manufacturing variation is normal. Consequently, the averaging of, for example, raw baseline profiles 170 to arrive at a (combined) baseline profile 172 may be advantageous to minimize the impact of any manufacturing variation. The averaging may occur across a number of locations in a stage of the turbomachine or a sub-region thereof (e.g., a quadrant). The averaging technique can be any now known or later developed manner of averaging point-wise along the particular raw baseline profiles 170 used. The averaging may occur prior to or after the described normalizing. In any event, baseline profile 172 may include an average of a plurality of two-dimensional profiles for a plurality of turbomachine airfoils.

Returning to FIG. 4 and with reference to FIGS. 7-8, in step S12, attainer 160 (FIG. 1) attains a two-dimensional used profile 190 (FIG. 7) of a leading edge at a specified radial position on the turbomachine airfoil after use. Turbomachine airfoil 132 has been in use and therefore has been exposed to the myriad of environmental conditions that may cause erosion to a leading edge thereof The erosion is indicated by the presence of a rough leading edge surface 196 (FIG. 7) and a lack of a smooth leading edge (as in FIGS. 5-6). Step S12 may include aligner 160 carrying out a number of sub-steps. More specifically, attainer 160 may receive a raw, two-dimensional used profile 190 (FIG. 7) of the leading edge at the specified radial position on the turbomachine airfoil after use, e.g., from profiler 130 or from memory. Laser profiler 130 measures turbomachine airfoil 132 during point of non-operation of the turbomachine, e.g., relative to a compressor, during a down time of the compressor and/or gas turbine system to which it is operatively coupled. Step S12 also may include attainer 160 calling on normalizer 162 to identify opposing substantially straight alignment portions 194 of used profile 190 by performing a linear regression analysis of each opposing side of raw used profile 190. The linear regression determines the location of alignment portions 194 of used profile 190 by calculating a linear representation thereof and comparing it the previously calculated linear representation for raw baseline profile 170 to ensure that alignment portions 194 (FIG. 7) correspond to alignment portions 174 (FIG. 5). That is, the slopes of raw two-dimensional used profile 190 and raw baseline profile 170 are compared to ensure portions 194 match portions 174. As shown in FIG. 8, attainer 160 may finally attain used profile 192 by performing any translating and rotating of raw used profile 190 necessary to allow aligning of the opposing substantially straight alignment portions 194 of raw used profile 190 with opposing substantially straight alignment portions 174 of baseline profile 172.

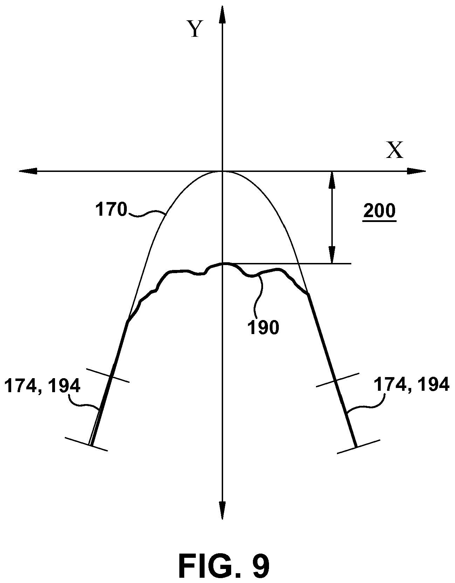

In step S14, as shown in FIG. 9, aligner 164 (FIG. 1) aligns opposing substantially straight alignment portions 194 (FIGS. 7-8) of two-dimensional used profile 190 (FIG. 6) with opposing substantially straight alignment portions 174 (FIGS. 5-6) of a previously attained, two-dimensional, baseline profile 172 (FIG. 6) of the turbomachine airfoil. As alignment portions 174, 194 of each respective profile 170, 190 are in substantially identical radial locations of the turbomachine airfoil 132 (FIG. 2), the alignment of the profiles indicates an amount of erosion 200 existing on the used turbomachine airfoil. Aligner 164 may align the profiles using any now known or later developed technique for ensuring overlap of portions 174, 194 within an acceptable tolerance.

In step S16, comparator 166 (FIG. 1) compares used profile 190 to baseline profile 170 to determine whether the leading edge at the specified radial position of the used turbomachine airfoil has erosion. The determination as to when erosion exists is based on a number of characteristics such as erosion 200 being: greater than a set distance, greater than a certain percentage of a width at a certain position, etc. The comparing results provide a measurement of leading edge erosion and therefore airfoil chord loss.

System 100 has a technical effect in that it allows for accurate monitoring of blade leading edge erosion which is indicative of potential operating restrictions and limitations for turbomachine airfoil 132. System 100 provides such results in a repeatable fashion via the use of mount 140. Proper implementation of the method can enable operability and provide awareness of low/high risk airfoils. Erosion monitoring may improve turbomachine (e.g., a gas turbine) operability and reduce costly unplanned outages as a result of airfoil failures due to erosion and subsequent crack propagation. In addition, system 100 may enable asset planning for airfoils (e.g., for forward compressor stages), extend airfoil life thus saving cost and avoiding unnecessary outages.

System 100 may gain additional accuracy and advantage by using a plurality of two-dimensional used profiles 190 in a number of ways. In one alternative embodiment, described with reference to FIGS. 4-6 and step S12, attainer 160 may attain a plurality of two-dimensional used profiles 192 of the leading edge at a plurality of specified radial positions R (FIG. 2) on a particular turbomachine airfoil 132 (FIG. 2). Each used profile 192 is attained as described herein. In this case, system 100 (computer device 104) is further configured to: align (with aligner 154) and compare (with comparator 155) each two-dimensional used profile 192 to a previously attained, two-dimensional, baseline profile 172 of the leading edge at a respective specified radial position on the turbomachine airfoil to determine whether the leading edge at the respective specified radial position has erosion. In this fashion, a number of locations along turbomachine airfoil 132 length can be evaluated for erosion.

In another alternative embodiment, described again with reference to FIGS. 4-6 and step S12, system 100 may be applied across a number of turbomachine airfoils in such a way that a trend in erosion can be determine for, e.g., a particular stage, sub-region of a stage or a particular turbomachine. In this embodiment, in step S12, attainer 160 may attain a two-dimensional used profile of a leading edge at a specified radial position on a plurality of circumferentially adjacent turbomachine airfoils 132 after use. For example, laser profiler 130 may measure a number of airfoils 132 within a particular stage or a sub-region (e.g., quadrant) of a stage. In this case, system 100 (computer device 104) may be further configured to: align (using aligner 164) and compare (using comparator 155) each two-dimensional used profile 192 to a previously attained, two-dimensional, baseline profile 172 of the leading edge at the specified radial position R of a respective turbomachine airfoil 132 to determine whether the leading edge at the specified radial position of each turbomachine airfoil has erosion. Here, system 100 can determine erosion for a number of airfoils 132 (FIG. 2).

In addition to evaluating a number of airfoils' erosion levels, in an alternative embodiment, system 100 may also evaluate for trends within the erosion determinations of the various airfoils and predict need for replacement. In particular, in optional step S18, trend module 168 (FIG. 1) may determine a trend in the two-dimensional used profiles 192 of the plurality of turbomachine airfoils 132, and predict a need for replacement or repair of at least one turbomachine airfoil. The determination of a trend may be carried out using any now known or later developed trend analysis technique, e.g., using regression analysis. Any form of a trend may be determined such as accelerated erosion within a particular quadrant, which may indicate a problem with airfoils within that quadrant. The prediction of a need for replacement or repair may be based on any now known or later developed knowledge base or analytic model for a particular turbomachine, airfoil or airfoil stage. For example, a certain percentage erosion average over the airfoils evaluated may indicate need for replacement of one or more of the airfoils.

Although described herein as occurring at a specific time, it is understood that the teachings of the invention may be applied repeatedly over a period of usage of the turbomachine airfoil(s) 132.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

As used herein, various systems and components are described as "receiving" or "obtaining" data (e.g., two-dimensional profiles of the turbomachine airfoil, etc.). It is understood that the corresponding data can be obtained using any solution. For example, the corresponding system/component can generate and/or be used to generate the data, retrieve the data from one or more data stores (e.g., a database) or measurement devices (e.g., laser profiler 130), receive the data from another system/component, and/or the like. When the data is not generated by the particular system/component, it is understood that another system/component can be implemented apart from the system/component shown, which generates the data and provides it to the system/component and/or stores the data for access by the system/component.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A computer-implemented (104) method for determining erosion of a turbomachine airfoil comprising:
attaining a two-dimensional (192) used profile of a leading edge at a specified radial (R) position on the turbomachine airfoil (132) after use;
aligning (154) opposing straight alignment portions (194) of the two-dimensional (192) used profile with opposing substantially straight alignment portions (174) of a previously attained, two-dimensional, baseline profile (172) of the turbomachine airfoil (132), the alignment portions (174) of each profile being in substantially identical radial locations of the turbomachine airfoil (132); and
comparing (155) the used profile (192) to the baseline profile (172) to determine whether the leading edge at the specified radial (R) position of the used turbomachine airfoil (132) has erosion(200) based on predetermined characteristics, such as a set distance, a certain percentage of a width at a certain position;
**characterized in that** attaining the baseline profile (172), includes:
receiving a raw baseline profile (170) of the leading edge of the turbomachine airfoil (132) as measured by a profiler (130)) prior to use of the turbomachine airfoil (132);
normalizing the raw baseline profile (170) to attain the baseline profile (172) by:
identifying opposing straight alignment portions (174) of the raw baseline profile (170) at a specified depth range (DR) from the leading edge of the raw baseline profile (170);
determining a compare angle (α,ß) of each opposing alignment portion (174) relative to an axis centered at the leading edge of the raw baseline profile (170), and extending each alignment portion (174) past the leading edge to identify an intersection point (X₁,Y₁); and
attaining the baseline profile (172) by translating the raw baseline profile (170) to place the intersection point X₁,Y₁) on the axis and rotating the raw baseline profile (170) to make the compare angles (α,ß) of each alignment portion (174) equal relative to the axis; and
wherein the attaining the used profile (192) includes:
receiving a raw, two-dimensional used profile (190) of the leading edge at the specified radial (R) position on the turbomachine airfoil (132) after use;
identifying the opposing substantially straight alignment portions (174) of the raw used profile by performing a linear regression; and
attaining the used profile (192) by performing any translating and rotating of the raw used profile necessary to allow aligning of the opposing substantially straight alignment portions (174,194) of the used profile (190) with the opposing substantially straight alignment portions (174,194) of the baseline profile (172).

2. The method of claim 1, further comprising repeating the attaining, aligning and comparing for a plurality of radial positions (R) on the leading edge of the turbomachine airfoil (132).

3. The method of claim 1 or 2, further comprising repeating the attaining, aligning and comparing for a plurality of turbomachine airfoils (132) of a particular stage of the turbomachine.

4. The method of claim 3, further comprising determining a trend in the two-dimensional (190) used profiles of the plurality of turbomachine airfoils (132), and using the trend to predict a need for replacement or repair of the turbomachine airfoil (132).

5. The method of any preceding claim, further comprising repeating the
attaining, aligning and comparing for the turbomachine airfoil (132) over a period of usage of the turbomachine airfoil (132).

6. The method of any preceding claim, further comprising mounting a laser profiler (130) for measuring of the two-dimensional (190) used profile at the specified radial (R) position using a mount configured to ensure the laser (130) profiler senses at the specified radial (R) position.

7. A program product stored on a computer readable medium for determining erosion of a turbomachine airfoil (132), the computer readable medium comprising program code for performing the steps of the method of any preceding claim.

8. A system for determining erosion of a turbomachine airfoil comprising:
at least one computer device (104) comprising the program product of claim 7 configured to perform the steps of the method of any of claims 1 to 6.

9. The system of claim 8, further comprising a laser profiler (130) for measuring, during a point of non-use of the turbomachine airfoil (132), the two-dimensional used profile of the leading edge at the specified radial position on the turbomachine airfoil.

10. The system of claim 9, further comprising a mount (140) for mounting the laser profiler (130) for measuring of the two-dimensional profile at the specified radial position.

11. The system of claim 10, wherein the mount (140) includes:
a base (142) configured to interact with at least one of: a rotor wheel (144), a shank (146) of the turbomachine airfoil (132) and an airfoil portion (148) of the turbomachine airfoil (132),
a support (150) for supporting the laser profiler (130), and
an elongated member (152) for positioning the support (150) relative to the base (142) such that the laser profiler (130) senses at the specified radial position.

## Patentansprüche

1. Computerimplementiertes Verfahren (104) zum Bestimmen einer Erosion eines Turbomaschinenschaufelblattes, das Folgendes umfasst:
Erlangen eines zweidimensionalen (192) gebrauchten Profils einer Eintrittskante an einer bestimmten radialen Position (R) auf dem Turbomaschinenschaufelblatt (132) nach dem Gebrauch;
Ausrichten (154) gegenüberliegender gerader Ausrichtungsabschnitte (194) des zweidimensionalen (192) gebrauchten Profils mit gegenüberliegenden im Wesentlichen geraden Ausrichtungsabschnitten (174) eines vorher erlangten zweidimensionalen Grundprofils (172) des Turbomaschinenschaufelblattes (132), wobei sich die Ausrichtungsabschnitte (174) jedes Profils an im Wesentlichen identischen radialen Orten des Turbomaschinenschaufelblattes (132) befinden; und
Vergleichen (155) des gebrauchten Profils (192) mit dem Grundprofil (172), um zu bestimmen, ob die Eintrittskante an der bestimmten radialen Position (R) des gebrauchten Turbomaschinenschaufelblattes (132) eine Erosion (200) aufweist, anhand von vorgegebenen Eigenschaften, wie etwa eines eingestellten Abstands, eines bestimmten Anteils einer Breite an einer bestimmten Position;
**dadurch gekennzeichnet, dass** das Erlangen des Grundprofils (172) Folgendes enthält:
Empfangen eines unverarbeiteten Grundprofils (170) der Eintrittskante des Turbomaschinenschaufelblattes (132) wie durch eine Profilmesseinrichtung (130) vor dem Gebrauch des Turbomaschinenschaufelblattes (132) gemessen;
Normieren des unverarbeiteten Grundprofils (170), um das Grundprofil (172) zu erlangen durch:
Identifizieren gegenüberliegender gerader Ausrichtungsabschnitte (174) des unverarbeiteten Grundprofils (170) an einem bestimmten Tiefenbereich (DR) von der Eintrittskante des unverarbeiteten Grundprofils (170);
Bestimmen eines Vergleichswinkels (α, β) jedes gegenüberliegenden Ausrichtungsabschnitts (174) in Bezug auf eine an der Eintrittskante des unverarbeiteten Grundprofils (170) zentrierten Achse und Verlängern jedes Ausrichtungsabschnitts (174) über die Eintrittskante hinaus, um einen Schnittpunkt (X₁, Y₁) zu identifizieren;
Erlangen des Grundprofils (172) durch Verschieben des unverarbeiteten Grundprofils (170), um den Schnittpunkt (X₁, Y₁) auf der Achse zu positionieren, und Drehen des unverarbeiteten Grundprofils (170), um die Vergleichswinkel (α, β) jedes Ausrichtungsabschnitts (174) in Bezug auf die Achse anzugleichen; und
wobei das Erlangen des gebrauchten Profils (192) enthält:
Empfangen eines unverarbeiteten zweidimensionalen gebrauchten Profils (190) der Eintrittskante an der bestimmten radialen Position (R) auf dem Turbomaschinenschaufelblatt (132) nach dem Gebrauch;
Identifizieren der gegenüberliegenden im Wesentlichen geraden Ausrichtungsabschnitte (174) des unverarbeiteten gebrauchten Profils durch Ausführen einer linearen Regression; und
Erlangen des gebrauchten Profils (192) durch Ausführen einer Verschiebung und einer Drehung des unverarbeiteten gebrauchten Profils, die nötig sind, um eine Ausrichtung der gegenüberliegenden im Wesentlichen geraden Ausrichtungsabschnitte (174, 194) des gebrauchten Profils (190) mit den gegenüberliegenden im Wesentlichen geraden Ausrichtungsabschnitten (174, 194) des Grundprofils (172) zu erlauben.

2. Verfahren nach Anspruch 1, das ferner umfasst, das Erlangen, Ausrichten und Vergleichen für mehrere radiale Positionen (R) auf der Eintrittskante des Turbomaschinenschaufelblattes (132) zu wiederholen.

3. Verfahren nach Anspruch 1 oder 2, das ferner umfasst, das Erlangen, Ausrichten und Vergleichen für mehrere Turbomaschinenschaufelblätter (132) einer bestimmten Stufe der Turbomaschinenschaufelblätter zu wiederholen.

4. Verfahren nach Anspruch 3, das ferner umfasst, eine Tendenz in den zweidimensionalen (190) gebrauchten Profilen der mehreren Turbomaschinenschaufelblätter (132) zu bestimmen und die Tendenz zu verwenden, um eine Notwendigkeit eines Austauschs oder einer Reparatur des Turbomaschinenschaufelblattes (132) vorherzusagen.

5. Verfahren nach einem vorhergehenden Anspruch, das ferner umfasst, das Erlangen, Ausrichten und Vergleichen für das Turbomaschinenschaufelblatt (132) über eine Gebrauchsperiode des Turbomaschinenschaufelblattes (132) zu wiederholen.

6. Verfahren nach einem vorhergehenden Anspruch, das ferner umfasst, eine Laserprofilmesseinrichtung (130) zum Messen des zweidimensionalen (190) gebrauchten Profils an der bestimmten radialen Position (R) unter Verwendung einer Befestigung anzubringen, die konfiguriert ist, zu gewährleisten, dass die Laserprofilmesseinrichtung (130) an der bestimmten radialen Position (R) erfasst.

7. Programmprodukt, das auf einem computerlesbaren Medium gespeichert ist, um eine Erosion eines Turbomaschinenschaufelblattes (132) zu bestimmen, wobei das computerlesbare Medium Programmcode umfasst, um die Schritte des Verfahrens nach einem vorhergehenden Anspruch auszuführen.

8. System zum Bestimmen einer Erosion eines Turbomaschinenschaufelblattes, das Folgendes umfasst:
mindestens eine Rechenvorrichtung (104), die das Programmprodukt nach Anspruch 7 umfasst, das konfiguriert ist, die Schritte des Verfahrens nach einem der Ansprüche 1 bis 6 auszuführen.

9. System nach Anspruch 8, das ferner eine Laserprofilmesseinrichtung (130) umfasst, um während eines Punkts des Nichtgebrauchs des Turbomaschinenschaufelblattes (132) das zweidimensionale gebrauchte Profil der Eintrittskante an der bestimmten radialen Position auf dem Turbomaschinenschaufelblatt zu messen.

10. System nach Anspruch 9, das ferner eine Befestigung (140) umfasst, um die Laserprofilmesseinrichtung (130) zu befestigen, um das zweidimensionale Profil an der bestimmten radialen Position zu messen.

11. System nach Anspruch 10, wobei die Befestigung (140) Folgendes enthält:
eine Basis (142), die konfiguriert ist, mit einem Rotorrad (144) und/oder einem Schaft (146) des Turbomaschinenschaufelblattes (132) und/oder einem Schaufelblattabschnitt (148) des Turbomaschinenschaufelblattes (132) wechselzuwirken,
eine Tragevorrichtung (150), um die Laserprofilmesseinrichtung (130) zu tragen, und
ein langgestrecktes Element (152), um die Tragevorrichtung (150) in Bezug auf die Basis (142) derart zu positionieren, dass die Laserprofilmesseinrichtung (130) an der bestimmten radialen Position erfasst.

## Revendications

1. Procédé (104) mis en oeuvre par ordinateur pour déterminer l'érosion d'une aube de turbomachine, comportant les étapes consistant à :
obtenir un profil usagé bidimensionnel (192) d'un bord d'attaque à une position radiale (R) spécifiée sur l'aube (132) de turbomachine après utilisation ;
aligner (154) des parties (194) d'alignement rectilignes opposées du profil usagé bidimensionnel (192) avec des parties (174) d'alignement sensiblement rectilignes opposées d'un profil bidimensionnel (172) de référence obtenu précédemment de l'aube (132) de turbomachine, les parties (174) d'alignement de chaque profil se trouvant à des emplacements radiaux sensiblement identiques de l'aube (132) de turbomachine ; et
comparer (155) le profil usagé (192) au profil (172) de référence pour déterminer si le bord d'attaque dans la position radiale (R) spécifiée de l'aube usagée (132) de turbomachine présente une érosion (200) d'après des caractéristiques prédéterminées, comme une distance fixée, un certain pourcentage d'une largeur à une certaine position ;
**caractérisé en ce que** l'obtention du profil (172) de référence, comprend les étapes consistant à :
recevoir un profil brut (170) de référence du bord d'attaque de l'aube (132) de turbomachine tel que mesuré par un moyen (130) de génération de profils avant l'utilisation de l'aube (132) de turbomachine ;
normaliser le profil brut (170) de référence pour obtenir le profil (172) de référence en :
identifiant des parties (174) d'alignement rectilignes opposées du profil brut (170) de référence à une plage (DR) de profondeur spécifiée par rapport au bord d'attaque du profil brut (170) de référence ;
déterminant un angle (α, β) de comparaison de chaque partie opposée (174) d'alignement par rapport à un axe centré sur le bord d'attaque du profil brut (170) de référence, et prolonger chaque partie (174) d'alignement au-delà du bord d'attaque pour identifier un point (X₁, Y₁) d'intersection ; et
obtenant le profil (172) de référence en translatant le profil brut (170) de référence pour placer le point (X₁, Y₁) d'intersection sur l'axe et en faisant pivoter le profil brut (170) de référence pour rendre égaux les angles (α, β) de comparaison de chaque partie (174) d'alignement par rapport à l'axe ; et
l'obtention le profil usagé (192) comprenant les étapes consistant à :
recevoir un profil usagé bidimensionnel brut (190) du bord d'attaque à la position radiale (R) spécifiée sur l'aube (132) de turbomachine après utilisation ;
identifier les parties (174) d'alignement sensiblement rectilignes opposées du profil brut usagé en effectuant une régression linéaire ; et
obtenir le profil usagé (192) en effectuant toute translation et rotation nécessaire du profil brut usagé pour permettre l'alignement des parties (174, 194) d'alignement sensiblement rectilignes opposées du profil usagé (190) avec les parties (174, 194) d'alignement sensiblement rectilignes opposées du profil (172) de référence.

2. Procédé selon la revendication 1, comportant en outre les étapes consistant à répéter l'obtention, l'alignement et la comparaison pour une pluralité de positions radiales (R) sur le bord d'attaque de l'aube (132) de turbomachine.

3. Procédé selon la revendication 1 ou 2, comportant en outre les étapes consistant à répéter l'obtention, l'alignement et la comparaison pour une pluralité d'aubes (132) de turbomachine d'un étage particulier de la turbomachine.

4. Procédé selon la revendication 3, comportant en outre les étapes consistant à déterminer une tendance dans les profils usagés bidimensionnels (190) de la pluralité d'aubes (132) de turbomachine, et à utiliser la tendance pour prédire un besoin de remplacement ou de réparation de l'aube (132) de turbomachine.

5. Procédé selon l'une quelconque des revendications précédentes, comportant en outre les étapes consistant à répéter l'obtention, l'alignement et la comparaison pour l'aube (132) de turbomachine sur une période d'utilisation de l'aube (132) de turbomachine.

6. Procédé selon l'une quelconque des revendications précédentes, comportant en outre l'étape consistant à monter un moyen (130) de génération de profils à laser pour la mesure du profil usagé bidimensionnel (190) à la position radiale (R) spécifiée en utilisant une monture configurée pour s'assurer que le moyen (130) de génération de profils à laser détecte à la position radiale (R) spécifiée.

7. Produit de programme stocké sur un support lisible par ordinateur pour déterminer l'érosion d'une aube (132) de turbomachine, le support lisible par ordinateur comportant du code de programme servant à effectuer les étapes du procédé selon l'une quelconque des revendications précédentes.

8. Système pour déterminer l'érosion d'une aube de turbomachine, comportant :
au moins un dispositif informatique (104) comportant le produit de programme selon la revendication 7 configuré pour effectuer les étapes du procédé selon l'une quelconque des revendications 1 à 6.

9. Système selon la revendication 8, comportant en outre un moyen (130) de génération de profils à laser servant à mesurer, pendant un point de non-utilisation de l'aube (132) de turbomachine, le profil usagé bidimensionnel du bord d'attaque à la position radiale spécifiée sur l'aube de turbomachine.

10. Système selon la revendication 9, comportant en outre une monture (140) servant à monter le moyen (130) de génération de profils à laser pour la mesure du profil bidimensionnel à la position radiale spécifiée.

11. Système selon la revendication 10, la monture (140) comprenant :
une embase (142) configurée pour interagir avec au moins un composant parmi : une roue (144) de rotor, un pied (146) de l'aube (132) de turbomachine et une partie (148) d'aube de l'aube (132) de turbomachine,
un support (150) servant à soutenir le moyen (130) de génération de profils à laser, et
un élément allongé (152) servant à positionner le support (150) par rapport à la base (142) de telle façon que le moyen (130) de génération de profils à laser détecte à la position radiale spécifiée.
